# EUROPÄISCHE PATENTANMELDUNG

(11) **EP 4 138 272 A1**
(43) Veröffentlichungstag der Anmeldung: **22.02.2023**
(21) Anmeldenummer: 21191708.3
(22) Anmeldetag: 17.08.2021
(51) Int. Cl.: H02K 1/276, H02K 15/03, H02K 15/12

(54) **ROTOR MIT UNTERSCHIEDLICHEN SEKTOREN**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft einen Rotor (5) einer dynamoelektrischen permanenterregten Maschine (1) mit
einer vorgebbaren Anzahl von Polen (27),
- wobei das Blechpaket (30) Bleche aufweist, die jeweils Sektoren (29) mit zumindest zwei unterschiedlichen Ausgestaltungen (81,82,83,84) - in vorgebbarer axialer Reihenfolge und Drehung oder axialer Reihenfolge und Drehung und Umschlagung, aufgebaut ist, wobei die Bleche (8) unabhängig von der Ausgestaltung der Sektoren (29) jeweils eine Wellenbohrung (26), identische Anzahl von Polen (27) bzw. Sektoren, axial fluchtende Ausnehmungen (21) und identischen Außendurchmesser aufweisen,
- wobei Sektoren (29) mit einer ersten Ausgestaltung (81) Elemente zur Verteilung einer Vergussmasse oder eines Klebers innerhalb des Blechpakets (30) aufweisen und Sektoren (29) mit einer zweiten Ausgestaltung (82) Halteelemente zur mechanischen Festigkeit des Blechpakets (30) aufweisen,
- wobei die Flusssperren (13), und die im Wesentlichen axial verlaufenden Spalte zwischen dem Permanentmagneten (9) und dem jeweilig ihn umgebenden Blechpaket (3) durch einen Kleber und/oder eine Vergussmasse ausgefüllt sind.

## Beschreibung

Die Erfindung betrifft einen Rotor einer permanenterregten dynamoelektrischen Maschine, ein Verfahren zur Herstellung eines Rotors einer permanenterregten dynamoelektrischen Maschine, eine permanenterregte dynamoelektrischen Maschine mit einem derartigen Rotor, als auch eine Verwendung einer permanenterregten dynamoelektrischen Maschine.

Industrielle Niederspannungsmotoren (<1KV Nennspannung) vor allem in den Wirkungsgradklassen IE4 und höher, weisen üblicherweise Rotoren mit Permanentmagneten auf. Dabei werden die Permanentmagnete in die hierfür vorgesehenen Taschen des Blechpakets des Rotors eingebracht (sogenannte vergrabene Permanentmagnete).

Nach dem Einbringen der Permanentmagnete in die Taschen müssen diese Permanentmagnete mit dem Blechpaket des Rotors fixiert werden. Damit soll ein Spiel zwischen Blechpaket und Permanentmagneten vermieden werden, was bei mechanischen Einwirkungen, wie Vibrationen und Fliehkräften, während des Betriebs der permanenterregten dynamoelektrischen Maschine oder aufgrund von Magnetkräfte eine Positionsänderung der Permanentmagnete verursacht.

Üblicherweise werden die Permanentmagnete hierfür mittels eines reaktiven Kunststoffklebers in die Taschen geklebt.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (mittels Ofen, z.B. 140°C für 2h) gehärtet werden muss. Zum einen ist hierbei das Aufheizen und Abkühlen des gesamten Rotors ein zeit- und kostspieliger Prozessschritt zum anderen können derartige Temperaturen zu einer Teilentmagnetisierung der Permanentmagnete führen.

Die Auslegung von derartigen Blechen für Rotoren ist ein Kompromiss aus unterschiedlichen, miteinander konkurrierenden teilweise sogar entgegenstehenden Anforderungen hinsichtlich der elektromagnetischen und mechanischen Eigenschaften und der Eignung zur prozesssicheren Produktion von derartigen Rotoren.

Bisher folgt die Auslegung der derartiger Rotorbleche streng symmetrisch, wobei ein Kompromiss aus elektromagnetischen, mechanischen und fertigungstechnisch relevanten Eigenschaften angestrebt wird. Oftmals wird gezielt nach einer Eigenschaft optimiert, was aber Nachteile bei anderen Anforderungen nach sich zieht. Beispielsweise führt eine Optimierung hinsichtlich fertigungstechnischer Eigenschaften, wie größere Spalte zum Fügen und Verkleben der Magneten, zu einer Reduzierung des Wirkungsgrades der permanenterregten dynamoelektrischen Maschine. Eine Optimierung des Wirkungsgrades führt aber zu einer eingeschränkten Rotorfestigkeit und damit reduzierter Drehzahltauglichkeit einer dynamoelektrischen Maschine und Problemen bei der Produktion des Rotors.

Eine Möglichkeit der Fixierung von Permanentmagneten ist das vorherige Einbringen eines pastösen Klebstoffes in die Tasche, welcher dann durch den später eingeschobenen Permanentmagneten derart verdrängt wird, dass er sich um den Permanentmagneten schmiegt. Dieses Einsetzen der Permanentmagnete in das pastöse Material führt allerdings zu einer gewissen Positionsungenauigkeit innerhalb einer Tasche, da sich die verdrängte Paste nicht gleichförmig um den Magneten schmiegt und sich somit nur punktuelle Verklebungen einstellen. Das Handling von aufmagnetisierten Permanentmagneten ist dabei nicht trivial und kann aufgrund der Magnetkräfte nicht ordentlich, in der wünschenswerten Weise, durchgeführt werden, ohne dass nach jedem Magneteinschub das Werkzeug einer Hilfsvorrichtung von der voreingebrachten Klebe-Paste gereinigt werden muss.

Die DE 10 2009 054 584 A1 zeigt einen Rotor für eine Elektromaschine, umfassend übereinander zu einem Lamellenpaket angeordnete Lamellen, in dem Lamellenpaket ausgebildete Taschen zur Aufnahme von Permanentmagneten und in den Taschen angeordnete Permanentmagnete, die stoffschlüssig mit einem Verbindungsstoff an dem Lamellenpaket befestigt sind, wobei das Lamellenpaket mit wenigstens einer Ausnehmung zum Einbringen des Verbindungsstoffs versehen ist.

Nachteilig dabei ist u.a., dass die dort als Ausnehmungen bezeichneten Steigkanäle im Bereich des magnetischen Flusses angeordnet sind und somit zu einer vergleichsweise geringen Effizienz einer permanenterregten dynamoelektrischen Maschine mit einem derartigen Rotor führen.

Ausgehend davon liegt der Erfindung die Aufgabe zugrunde einen Rotor zu schaffen, um eine Effizienz- und Wirkungsgradsteigerung einer permanenterregten dynamoelektrischen Maschine zu erhalten. Dabei soll die Herstellung eines derartigen Rotors vergleichsweise einfach sein, und vergleichsweise wenig Prozessschritte bei der Herstellung erfordern. Außerdem soll die Verwendung des Rotors in einer permanenterregten dynamoelektrischen Maschine bei unterschiedlichsten Antriebsaufgaben vergleichsweise günstige Verbrauchsdaten liefern.

Die Lösung der gestellten Aufgabe gelingt durch einen Rotor einer dynamoelektrischen permanenterregten Maschine mit einer vorgebbaren Anzahl von Polen,
- wobei die Pole des Rotors jeweils durch einen oder mehrere Permanentmagnete gebildet sind und Sektoren bilden,
- wobei die Permanentmagnete in im Wesentlichen axial verlaufenden, umfänglich geschlossenen Ausnehmungen eines Blechpakets angeordnet sind,
- wobei die Ausnehmungen, Bereiche von Taschen, zur Aufnahme der Permanentmagnete und Flusssperren, zur Führung eines Magnetflusses aufweisen, in welche Ausnehmungen zumindest abschnittsweise Halteelemente ragen,
- wobei das Blechpaket Bleche aufweist, die jeweils Sektoren mit zumindest zwei unterschiedlicher Ausgestaltung - in vorgebbarer axialer Reihenfolge und Drehung oder axialer Reihenfolge und Drehung und Umschlagung, aufgebaut ist, wobei die Bleche unabhängig von der Ausgestaltung der Sektoren jeweils eine Wellenbohrung, identische Anzahl von Polen bzw. Sektoren, axial fluchtende Ausnehmungen und identischen Außendurchmesser aufweisen,
- wobei Sektoren mit einer ersten Ausgestaltung Elemente zur Verteilung einer Vergussmasse oder eines Klebers innerhalb des Blechpakets aufweisen und Sektoren mit einer zweiten Ausgestaltung Halteelemente zur mechanischen Festigkeit des Blechpakets aufweisen,
- wobei die Flusssperren, und die im Wesentlichen axial verlaufenden Spalte zwischen dem Permanentmagneten und dem jeweilig ihn umgebenden Blechpaket durch einen Kleber und/ oder eine Vergussmasse ausgefüllt sind.

Die Lösung der gestellten Aufgabe gelingt auch durch ein Verfahren zur Herstellung eines erfindungsgemäßen Rotors einer dynamoelektrischen permanenterregten Maschine durch folgende Schritte:
- Paketieren eines Blechpakets aus axial geschichteten Blechen mit mindestens zwei unterschiedlichen Polsektoren axialer Reihenfolge und Drehung oder axialer Reihenfolge und Drehung und Umschlagung, wobei die Bleche unabhängig von der Ausgestaltung ihrer Sektoren jeweils eine Wellenbohrung, identische Anzahl von Polen bzw. Sektoren, axial fluchtende Ausnehmungen und identischen Außendurchmesser aufweisen,
- wobei Sektoren mit einer ersten Ausgestaltung Elemente zur Verteilung einer Vergussmasse oder eines Klebers und/oder Optimierung des magnetischen Flusses innerhalb des Blechpakets aufweisen und Sektoren mit einer zweiten Ausgestaltung Halteelemente zur mechanischen Festigkeit des Blechpakets aufweisen,
- Einsetzen von Permanentmagneten in die Ausnehmungen,
- Anbringen einer Verteilscheibe an zumindest einer Stirnseite des Blechpakets, mit zumindest einer Zuführöffnung und zumindest einem Ringkanal auf der dem Blechpaket zugewandten Seite, der zumindest einen Teil der Flusssperren jeder Ausnehmung bedeckt,
- Vergießen der Hohlräume des Blechpakets über die Zuführöffnung und den Ringkanal der Verteilscheibe, die Flusssperren, und die im Wesentlichen axial verlaufenden Spalte zwischen dem Permanentmagneten und dem jeweilig ihn umgebenden Blechpaket, durch einen Kleber und/oder eine Vergussmasse, so dass zumindest die Permanentmagnete des Rotors fixiert werden.

Die Lösung der gestellten Aufgabe gelingt auch durch eine dynamoelektrische Maschine, insbesondere permanenterregte Synchronmaschine mit einem erfindungsgemäßen Rotor.

Die Lösung der gestellten Aufgabe gelingt auch durch die Verwendung einer dynamoelektrischen Maschine, insbesondere einer permanenterregten Synchronmaschine bei Kompressoren, Verdichtern, Pumpen, Antrieb von Förderbändern, in der Nahrungsmittelindustrie, und in maritimen Anwendungen.

Erfindungsgemäß wird nun ein Rotor bereitgestellt, der einen Kompromiss aus unterschiedlichen, miteinander konkurrierenden Anforderungen hinsichtlich der elektromagnetischen und mechanischen Eigenschaften und der Eignung zur prozesssicheren Produktion von derartigen Rotoren bildet. Dies führt zu einer Effizienz- und Wirkungsgradsteigerung einer permanenterregten dynamoelektrischen Maschine.

Erfindungsgemäß führt die Entflechtung von miteinander konkurrierenden Anforderungen hinsichtlich der elektromagnetischen und mechanischen Eigenschaften und der Eignung zur prozesssicheren Produktion von derartigen Rotoren bei nahezu identischen Blechen zu unterschiedlich gestalteten Polsektoren eines Rotors. Dies gewährleistet, neben der vergleichsweise einfachen Fertigung des Rotors, einen effizienten Betrieb einer dynamoelektrischen permanenterregten Maschine.

Als Blechpaket wird dabei der aktive Teil des Rotors verstanden, der axial gestapelte Bleche aufweist und mit Permanentmagneten versehen ist und zur Drehmomentbildung beiträgt, nicht jedoch eventuelle Verteilscheiben und/oder Abschlussscheiben am stirnseitigen Ende des Blechpakets des Rotors.

Als Ausnehmungen sind dabei Ausstanzungen der einzelnen Bleche zu verstehen, die paketiert, axial hintereinander angeordnet sind. Die Ausnehmungen weisen sowohl Taschen als auch die Flusssperren auf. Die Taschen sind zur Aufnahme der oder des Permanentmagneten vorgesehen. In den Raum der Ausnehmungen ragen optional Halteelemente, wie Stege, Randstege, Haltestege und/oder Haltenasen zur ergänzenden Fixierung und Halterung der Permanentmagnete während der Fertigung und/oder im Betrieb der dynamoelektrischen Maschine gegenüber Fliehkraftbeanspruchungen. In die Taschen der Ausnehmungen werden die Permanentmagnete axial eingesetzt.

Durch die Optimierung des jeweiligen Designs eines Sektors auf möglichst wenige Anforderungen werden die elektromagnetischen und mechanischen Eigenschaften des mit Permanentmagneten bestückten Rotors verbessert. Mit anderen Worten - Sektoren werden im Wesentlichen entweder nach elektromagnetischen Anforderungen oder nach mechanischen Anforderungen optimiert. Dabei gibt es Sektoren -mit einer ersten Ausgestaltung - des Bleches, die für die Zufuhr und Verteilung einer Vergussmasse oder eines Klebers in die Ausnehmungen ausgelegt sind - also implizit nach elektromagnetischen Gesichtspunkten ausgelegt sind. Daneben gibt es Sektoren - mit einer zweiten Ausgestaltung - des Bleches, die im Wesentlichen auf eine mechanische Stabilisierung u.a. des gesamten Blechpakets ausgelegt sind. Diese jeweiligen Aufgaben dieser Sektoren mit ihren ersten und zweiten Ausgestaltungen können jeweils noch weiter aufgeteilt werden, so dass es dritte, vierte oder noch weitere Ausgestaltungen der Sektoren geben kann.

So können dritte Ausgestaltungen der Sektoren partielle Ausstanzungen aufweisen. Vierte Ausgestaltungen der Sektoren können verstärkte Haltestege aufweisen.

Damit ergeben sich folgende mögliche nicht abschließend aufgeführten Möglichkeiten der Gestaltung von Blechpaketen:
Jedes Blech eines Blechpakets ist identisch. Jeder Pol ist in einem Sektor angeordnet.
Sektoren haben entweder eine erste Ausgestaltung, die für die Verteilung einer Vergussmasse oder Klebers zuständig ist (wie partielle Ausstanzungen, schmale oder keine Haltestege...)
oder eine zweite Ausgestaltung, die für die mechanische Stabilität zuständig ist (wie Randstege, Haltestege; Haltenasen...). Des Weiteren können Sektoren vorhanden sein mit einer dritten Ausgestaltung, die partielle Ausstanzungen aufweist. Des Weiteren können Sektoren vorhanden sein, mit einer vierten Ausgestaltung, die lediglich eine Grundausstattung aufweisen.

In einer anderen Ausführung weist jedes Blech nur eine erste oder zweite Ausgestaltung seiner Sektoren auf, wobei die restlichen Sektoren nur die Grundausstattung aufweisen.

In einer anderen Ausführung ist wiederum jedes Blech identisch und jeder Pol ist in einem Sektor angeordnet. Einer oder mehrere Sektoren weisen eine erste Ausgestaltung für die Verteilung einer Vergussmasse oder eines Klebers auf (partielle Ausstanzungen, keine oder schmale Haltestege etc.). Einer oder mehrere Sektoren weisen eine zweite Ausgestaltung zur mechanischen Stabilisierung auf, wie Randstege, Haltestege, Haltenasen etc.

Jeder Pol bzw. Sektor des Rotors weist zumindest eine Ausnehmung auf. Bei mehreren Ausnehmungen pro Pol sind diese V-förmig, U-förmig oder dachförmig angeordnet. Jede Tasche einer Ausnehmung weist einen oder mehrere Permanentmagnete auf. Jeder Pol eines Blechpakets ist in einem Sektor angeordnet und ist unabhängig vom jeweiligen Sektor mit der identischen "Menge" an Permanentmagneten versehen.

Den einzelnen Blechen sind nun neben den gemeinsamen Grundausstattungen, wie Wellenbohrung, axial fluchtende Ausnehmungen, gleiche Anzahl von Polen und gleicher Außendurchmesser zur Optimierung der Einzelanforderungen zusätzliche spezifische Eigenschaften (wie erste Ausgestaltung, zweite Ausgestaltung, etc.) zumindest einiger ihrer Pole bzw. Sektoren zugewiesen.

Mit den ersten und zweiten etc. Ausgestaltungen sind dabei Ausstattungsvarianten der jeweiligen Sektoren bzw. Pole eines Blechs zu verstehen.

Die Zufuhr eines Klebers oder einer Vergussmasse über die Flusssperren erlaubt ein sicheres Fixieren (z.B. Verkleben/Vergießen) der Permanentmagnete in den jeweiligen Taschen. Die Verabreichung des Klebers oder der Vergussmasse erfolgt mit oder ohne Druck.

Sektoren mit der zweiten Ausgestaltung weisen nun Eigenschaften, insbesondere Halteelemente auf, die zur mechanischen Stabilisierung des Blechs und des Blechpakets beitragen. Diese Halteelemente sind in Form von Haltestegen und/oder Haltenasen und/oder Randstegen ausgebildet, um die mechanische Stabilität des Blechs und des Blechpakets zu gewährleisten und die Permanentmagnete, zumindest bei der Fertigung, also dem Vergussprozess, zu fixieren.

Des Weiteren können Sektoren eine erste und/oder dritte Ausgestaltung im Bereich der Ausnehmungen, insbesondere den Taschen, in Form von partiellen Ausstanzungen aufweisen, die eine Erweiterung der Tasche darstellen, und die einen Verklebevorgang und/oder ein Vergießen erleichtert. Diese partiellen Ausstanzungen an den Taschen, die durch Form und Lage definierte Kapillaren bilden, tragen zur sicheren Fixierung der Permanentmagnete durch Verkleben/Vergießen in den Taschen bei. Damit erhält man eine größere Auswahl hinsichtlich der Viskosität der einsetzbaren Kleber/Vergussmassen.

Um den Verteilvorgang innerhalb einer axialen verlaufenden Ausnehmung besonders effizient zu gestalten, sind diese partiellen Ausstanzungen zusätzlich auch bei Sektoren mit einer zweiten Ausgestaltung möglich.

Die Grundausstattung weist nun folgende Eigenschaften auf: Wellenbohrung, Ausnehmungen, gleiche Anzahl von Polen und gleicher Außendurchmesser.

Die darüberhinausgehenden Eigenschaften, Halteelemente zur mechanischen Verstärkung und partielle Ausstanzungen, sind bei dem jeweiligen Blechen nur bei einem Pol bzw. Sektor, bei mehreren Polen bzw. Sektoren aber nicht bei allen Polen bzw. Sektoren gleichzeitig umgesetzt. Mit anderen Worten, die Sektoren unterscheiden sich, in Umfangsrichtung betrachtet, in zumindest einem Merkmal voneinander.

Falls die darüberhinausgehenden Eigenschaften, wie Halteelemente zur mechanischen Verstärkung und partielle Ausstanzungen bei nur einem oder einigen - aber nicht allen - Polen eines der Bleche vorliegen sollten, sind diese Eigenschaften im axialen Verlauf des Blechpakets allen Polen zuweisbar. Dabei wird während des Paketierens durch Verdreh- und/oder Umschlagspaketierung diese Eigenschaften gezielt den vorgegebenen Polen bzw. Sektoren zugewiesen.

Verdreht oder verdreht und umgeschlagen oder nur umgeschlagen wird dabei durch einen Winkel, der sich aus der Polzahl p des Rotors ergibt.

Außerdem beeinflusst die Anzahl der Sektoren mit einer ersten und/oder zweiten etc. Ausgestaltung die Häufung von Drehung und/oder Umschlagen der Bleche im axialen Aufbau des Blechpakets. Mit anderen Worten, bei einem 8-poligen Rotor ist bei einer Ausgestaltung nur eines Sektors mit einer ersten Ausgestaltung öfter eine Drehung vorzusehen, als bei Ausgestaltung zwei oder mehrerer Sektoren mit einer ersten Ausgestaltung.

Ein weiterer Vorteil ist, dass durch das Verdrehen oder Verdrehen und Umschlagen der Bleche Anisotropien aus den Materialeigenschaften des Bleches (Festigkeit und magnetische Eigenschaften sind beispielsweise abhängig von der Walzrichtung) egalisiert werden. Über die axiale Länge des Blechpakets des Rotors betrachtet führt dies zu einer Homogenisierung magnetischer Eigenschaften des gesamten Blechpakets, was zur Steigerung der Effizienz und zur Laufruhe des Rotors beiträgt.

Weitere Optimierungen des jeweiligen Sektors eines Bleches sind hinsichtlich mechanischer Festigkeit die Ausgestaltung der Halteelemente, der Randbegrenzungen der Flusssperren und der Stege, um die Permanentmagnete in den Taschen der Ausnehmungen zu halten. Dabei kann die Anzahl und Formgebung der Halteelemente, Stege, Haltenasen und Randstege je nach Anforderung angepasst werden.

Die im Rotor vorhandenen Ausnehmungen weisen dann, im axialen Verlauf betrachtet, alle Möglichkeiten der Einzeloptimierung auf. Je Drehzahlanforderungen und damit verbundenen Fliehkraftbeanspruchungen, dem vorgesehenen Vergussmaterial etc., sind dementsprechend die den Sektoren zugewiesenen Ausgestaltungen (erste, zweite oder gar dritte Ausgestaltung) und deren axiale Reihung als auch gegebenenfalls deren Verdrehung und/oder Umschlagung durchzuführen.

Zusätzlich können die Bleche, um die mechanische Stabilität des Blechpakets weiter zu verbessern, nach vorgebbarer axialer Reihenfolge, gegebenenfalls unter Verdrehen und/oder Umschlagen, zumindest zum Teil miteinander axial verklebt werden.

Damit können gegebenenfalls Stege, wie Haltestege, Randstege, insbesondere bei den zweiten Polsektoren, die der Stabilisierung des Blechpakets dienen, entfallen oder zumindest mit geringeren Dimensionen ausgeführt werden, was den magnetischen Streufluss reduziert.

Im axialen Verlauf des Blechpakets werden durch die gezielte Optimierung einzelner Ausnehmungen der jeweiligen Sektoren, insbesondere Taschen hinsichtlich einer Anforderung, die negativen Auswirkungen auf andere Anforderungen deutlich reduzieren.

Ein Paketieren der Bleche, also die axiale Reihung der Bleche und/oder deren Verdrehen und/oder Umschlagen kann auf einer Hilfswelle erfolgen. Ebenso ist es möglich, die Bleche axial miteinander zu verkleben.

Ebenso ist Stanzpaketieren der Bleche möglich, um ein Blechpaket zu erhalten, in das die Permanentmagnete einsetzbar sind.

Zusätzliches Paketieren erfolgt dann, wenn sich das Blechpaket auf der eigentlichen Welle befindet. Dabei wird das Blechpaket zwischen mittels zweier Scheiben zusammengepresst. Dies können zwei Verteilscheiben oder eine Verteilscheibe und eine Abschlussscheibe sein.

Eine Paketierung des Blechpakets kann auch über Zugankerverbindungen erfolgen.

Um nun einen Kleber oder eine Vergussmasse in das Blechpaket des Rotors über die Flusssperren einbringen zu können, ist zumindest an einer Stirnseite des Blechpakets eine Verteilscheibe vorgesehen. Diese wird, nachdem sich die Permanentmagnete in ihren Taschen befinden, angebracht, um den Kleber oder die Vergussmasse einzubringen.

Zumindest eine der beiden Scheiben ist dabei eine Verteilscheibe.

Das Blechpaket und/oder die Verteilscheiben werden vorzugsweise auf die Welle geschrumpft. Ebenso sind andere Möglichkeiten vorhanden, das Drehmoment vom Blechpaket auf die Welle zu übertragen, wie Passfederverbindungen etc.

Die Verteilscheibe weist auf der dem Blechpaket des Rotors zugewandten Seite zumindest einen umlaufenden zum Blechpaket hin offenen Ringkanal auf, um den Kleber oder die Vergussmasse über die Flusssperren der jeweiligen Ausnehmungen zukommen zu lassen. Je nach Aufbau des magnetischen Poles sind die Ringkanäle dementsprechend an der Verteilscheibe zu positionieren.

Auf der dem Blechpaket abgewandten Seite der Verteilscheibe ist zumindest eine Injektionsöffnung, also eine Zuführung vorgesehen, um den Ringkanal und damit das Blechpaket zu speisen. Optional weist der Ringkanal im Bereich einer Flusssperre der Ausnehmungen eines Pols des Rotors Erweiterungen auf, um ausreichend Vergussmasse für den jeweiligen Pol bzw. dessen mit Permanentmagneten versehenen Ausnehmungen bereitstellen zu können.

Der Ringkanal und optional dessen Erweiterung schließen mit der Stirnseite des Blechpakets formschlüssig und dicht ab, um einen dementsprechenden Druck und damit gegebenenfalls die erforderlichen Scherkräfte für das jeweilige Vergussmaterial aufbauen zu können.

Bei einem möglichen Verfahren zum Vergießen des Blechpakets des Rotors weist die Vergussmasse thixotropisches Verhalten auf, wobei die Viskosität infolge eines äußeren Einflusses (z.B. Druck) abnimmt und nach beendigter Beanspruchung wieder in die Ausgangsviskosität zurückkehrt.

Es sind aber auch andere Vergussmassen oder Kleber möglich.

Bei konstanter Scherung (Druck) nimmt mit der Zeit die Viskosität der Vergussmasse ab, nach Beendigung der Scherbelastung steigt die Viskosität dieser Vergussmasse zeitabhängig wieder an.

Eine Thixotropierung der Vergussmasse wird u.a. durch Zugabe und Dispergieren von pyrogener Kieselsäure Aerosil im Bereich zwischen 0,1-0,5 Vol.-% erreicht.

Bevor die Vergussmasse über eine Leitung oder einen Schlauch dem Rotor über die Verteilscheibe zugeführt wird, werden deren Bestandteile von mindestens zwei getrennt vorliegenden Komponenten durch Relativbewegung so umpositioniert, dass eine gleichmäßige und klar definierte Verteilung der zu mischenden Komponenten vorliegt.

Das Basisharzmaterial der Vergussmasse entspricht hierbei einem zweikomponentigen Reaktivharz auf Basis von Epoxy/Amin oder z.B. Polyurethan/Isocyanat. Eine Gelierung bei Raumtemperatur ist hierbei nach wenigen Minuten bis einigen Stunden einstellbar, so dass ohne zusätzliche Erwärmung (und damit einhergehender weiterer Verflüssigung des Harzgemisches) eine weitgehende Verfestigung der Masse eintritt.

Es stellt sich damit bei geringen Scherkräften (ca. 10 Pa) eine Scherviskosität von ca. 10^5-10^7 mPas ein. Bei erhöhten Scherkräften (ca. 200 Pa) tritt eine Scherviskosität von ca. 10^2-10^4 mPas ein. Diese Scherkräfte werden durch Druck in die Vergussmasse eingeleitet.

Eine Erholung des Materials, respektive der Viskosität, ergibt sich nach Abnahme der Scherkräfte (Abnahme des Druckes) innerhalb weniger Minuten, so dass es zu einer Selbstverfestigung der Vergussmasse kommt und keine Fließwege durch dünne Spalte, insbesondere zwischen den Einzelblechen des Blechpakets, des Rotors mehr entstehen.

Der Volumenschrumpf eines derartig gefüllten Rotors liegt bei unter 1%.

Die vorzugsweise raumtemperaturhärtende Vergussmasse kann, neben einem stark thixotropierten rheologischen Verhalten, durch geeignete Additive zum einen wärmeleitfähig (>0,5 W/mK) eingestellt werden. Diese Additive werden vor der Zuführung in den Rotor, insbesondere der Verteilscheibe der Vergussmasse, beigemischt. Dies führt im Betrieb der dynamoelektrischen Maschine zu einer verbesserten Wärmeabfuhr aus den Permanentmagneten, da diese durch Wirbelströme und/oder Luftspaltharmonischen aufgeheizt werden. Damit sind die Permanentmagnete mit vergleichsweise verbesserter Wärmeleitfähigkeit an das Blechpaket des Rotors gekoppelt.

Die Wärmeleitfähigkeit der Vergussmasse oder des Klebers kann durch Zugabe oder Zumischen verschiedener Füllstoffe erreicht werden. Die dabei vorgesehenen Additive sind Quarzmehl, Quarzgut, Alox, Kreide. Die einzelnen Komponenten sind zusammen oder auch einzeln den Füllstoffen (Vergussmasse, Kleber) beimischbar und können somit bis zu 40 Vol.% der gesamten Vergussmasse bzw. Klebers ausmachen.

Vorteilhafterweise erfolgt die Bestückung des Rotors mit Vergussmasse als aufsteigender Verguss bei erhöhtem Vergussdruck. Dabei ist die Achse des Rotors um einen vorgegebenen Winkel gegenüber der Horizontalen ausgerichtet, vorzugsweise 90°.

Ebenso verhält es sich mit weiteren Klebermaterialien.

Durch die aufsteigende Vergussmasse ist eine blasenfreie Applikation vor allem in den Ausnehmungen gewährleistet.

Zur Mischung wird ein statisches/dynamisches Mischrohr verwendet, um das Reaktivgemisch in situ zu mischen und direkt im Anschluss über die Verteilscheibe auf einer Stirnseite des Rotors über die Bohrungen in den Rotor, insbesondere das Blechpaket, zu applizieren.

Es können auch auf beiden Stirnseiten des Rotors Verteilscheiben vorgesehen sein, um eine Bestückung des Rotors von beiden Seiten vorzunehmen. Dabei sind die Verteilscheiben entweder identisch oder derart ausgebildet, dass jede Verteilscheibe lediglich die Hälfte der Pole des Rotors mit Vergussmasse versieht. Eine beidseitige Beschickung mit Vergussmasse kann vor allem bei axial langen Rotoren von Vorteil sein.

Über einen oder mehrere geeignete Injektionsanschlüsse an der Verteilerscheibe können Drücke von bis zu 10 bar, vorzugsweise 4,5 bar, appliziert werden, wodurch die frisch gemischte, thixotropierte Vergussmasse fließfähig wird und axial, insbesondere axial aufsteigend, in die verbleibenden geometrischen Zwischenräume des Rotors gelangt.

Als Zwischenräume sind dabei die Flusssperren, die Spalte zwischen den Permanentmagneten und den jeweiligen Blechen, die Zuführkanäle und die Bohrungen, aber nicht oder fast nicht die Schlitze zwischen den Einzelblechen senkrecht zur Achse gemeint.

Nach der vollständigen Befüllung der Ausnehmungen wird der Druck abgelassen. Eine Detektion, dass das Blechpaket mit den entscheidenden Zwischenräumen "voll" ist, erfolgt über den statischen im Vergleich zu dem dynamischen Druck (Detektion z.B. über Druckaufbau dynamischer vs. statischer Druck).

Ebenso ist eine optische Kontrolle möglich.

Die Vergussmasse im Rotor geliert danach drucklos bei Raumtemperatur und härtet innerhalb von 24 Stunden vollständig aus.

Es wird also, erfindungsgemäß, der Rotor mit seinen Permanentmagneten mit einer thixotropierenden Vergussmasse vergossen, welche bei Raumtemperatur geliert und vollständig härtet.

Durch die hohe Füllung und Nutzung von Thixotropieradditiven können mittels eines Druckverfahrens die Taschen aufsteigend gefüllt werden, ohne dass jedoch die Reaktivmasse durch kleine Schlitze, wie z.B. zwischen den Einzelblechen, entweichen kann.

Eine Weiterarbeit an und mit dem Rotor ohne mechanische Belastung ist schon nach ca. 1 Stunde möglich. Ein Durchdringen des Materials, also der Vergussmasse durch die Einzelbleche ist durch die Thixotropierung der Vergussmasse verhindert, so dass auf einen vorangehenden Lackierprozess der außenliegenden Mantelfläche verzichtet werden kann.

Eine geeignete Verteilscheibe, welche im Vergussprozess zumindest an einer Stirnseite des Blechpakets des Rotors mit vorgesehen wird, verbindet über eine oder mehrere Zuführungen an der Verteilscheibe, einen Ringkanal mit allen vorgesehenen Erweiterungen über die Bohrungen, um durch eine einzige Injektion mit einem Füllvorgang den Rotor zu "befüllen".

Die Verteilscheibe erfüllt somit mehrere Funktionen. Zum einen Paketieren des Blechpakets auf der Welle, Verteilung der Vergussmasse bzw. Klebers und als optionale Möglichkeiten zusätzlich den Rotor zu wuchten. Dabei wird über Materialentnahme an der Verteilscheibe oder zusätzlich anbringbare Wuchtgewichte an der Verteilscheibe die Wuchtung des Rotors durchgeführt.

Diese Verteilscheibe wird somit stirnseitig und formschlüssig vorab an das Blechpaket angebracht und kann im Nachgang des Vergießprozesses auch zur Wuchtung des Rotors genutzt werden. Um die Wuchtung nachhaltig durchzuführen, muss die Verteilscheibe am Blechpaket des Rotors verbleiben.

Eine mit einem derartigen Rotor ausgestattete permanenterregte Synchronmaschine weist eine hohe Effizienzklasse auf und ist somit für einen Antrieb, vor allem für den Dauerbetrieb von Kompressoren, Verdichtern, Förderbändern etc., geeignet.

Die Erfindung sowie weitere Ausgestaltungen der Erfindung werden anhand prinzipiell dargestellter Ausführungsbeispiele näher erläutert, darin zeigen:
- FIG 1: einen prinzipiellen Längsschnitt einer dynamoelektrischen Maschine,
- FIG 2 bis 6: Bleche mit unterschiedlichen Sektoren,
- FIG 7, 8: Detailansichten eines Sektors,
- FIG 9, 10: Seitenansichten eines Blechpakets,
- FIG 11: eine perspektivische Teilansicht einer Ausnehmung eines Sektors des Rotors,
- FIG 12: eine perspektivische Teilansicht einer Ausnehmung eines Sektors des Rotors,
- FIG 13: eine Teilansicht eines Querschnitts einer dynamoelektrischen Maschine,
- FIG 14: einen Längsschnitt durch einen erfindungsgemäßen Rotor,
- FIG 15: eine Verteilscheibe,
- FIG 16 bis 26: Ausgestaltungen von Polen des Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse gegebenenfalls an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

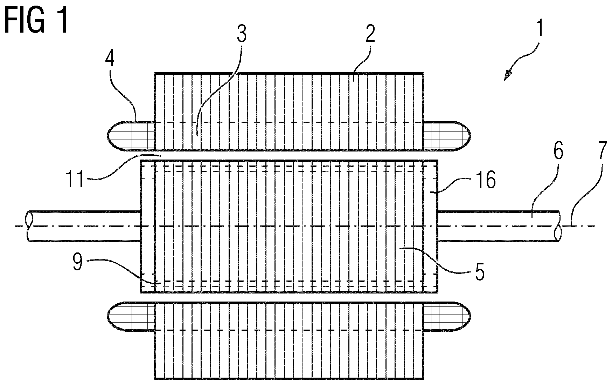

FIG 1 zeigt in einer prinzipielle Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem 3, z.B. Zahnspulen oder gesehnte Wicklungen aufweist, das an den Stirnseiten des Stators 2 einen Wickelkopf 4 ausbildet. Durch elektromagnetische Wechselwirkung über einen Luftspalt 11 wird durch ein bestromtes Wicklungssystem 3 ein Rotor 5 in Rotation um eine Achse 7 versetzt. Der Rotor 5, der koaxial zum Stator 2 angeordnet ist, weist in axial verlaufenden Ausnehmungen 21 eines Blechpakets 30 angeordnete Permanentmagnete 9 auf, die auch als vergrabene Permanentmagnete 9 bezeichnet werden. Die Bleche 8 des Rotors 5 sind paketiert und mit einer Welle 6 zumindest abschnittsweise drehfest verbunden.

Der Rotor 5 ist über ausgewählte Bleche 8 des Blechpakets 30 oder das gesamte Blechpaket 30 und/oder ergänzend durch Verteilscheiben 16 oder Abschlussscheiben mit der Welle 6 drehfest verbunden.

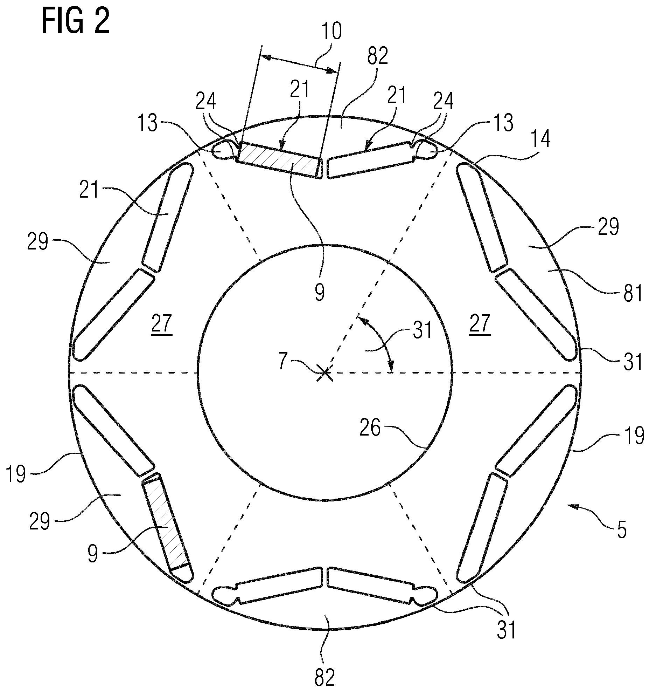

Die Ausführungen zu dem Blech 8 gemäß FIG 2 sind sinngemäß auch auf die Bleche der folgenden Figuren anzuwenden.

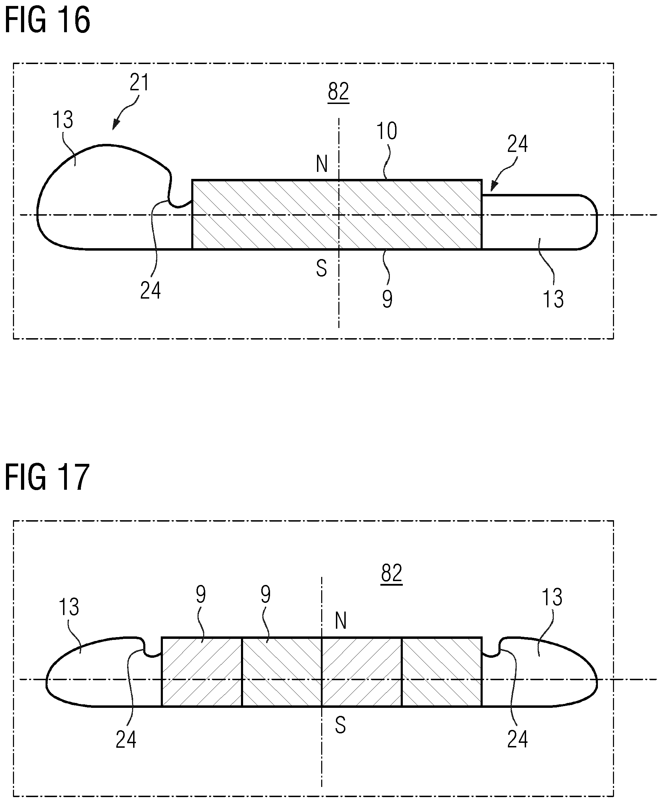

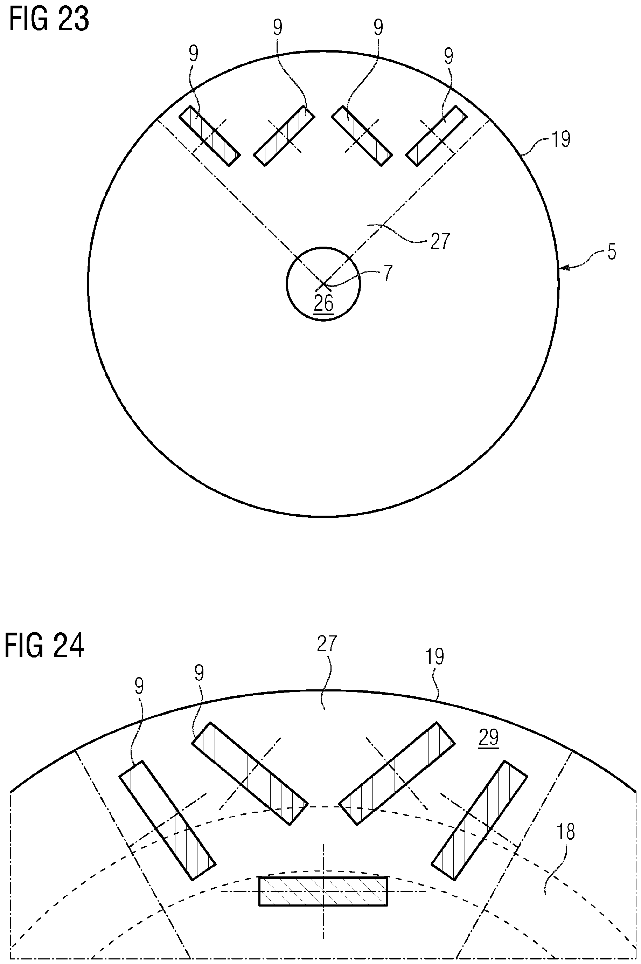

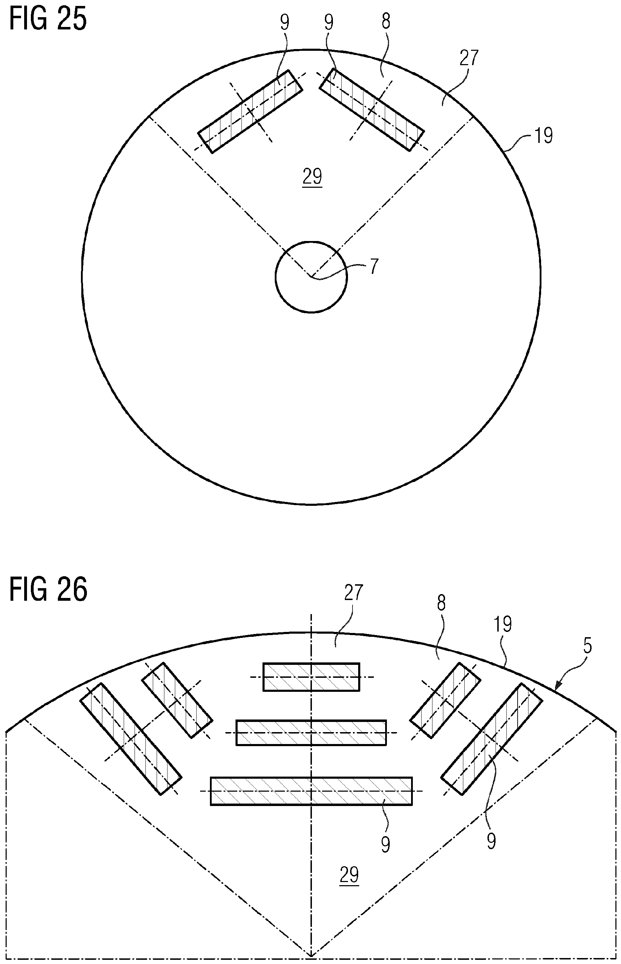

So zeigt FIG 2 ein Blech 8 eines Blechpakets 30, das mit den Permanentmagneten 9 magnetische Pole 27 des Rotors 5 bildet. Jeder magnetische Pol 27 nimmt jeweils einen Sektor 29 des Bleches 8 des Rotors 5 ein. Der Sektor 29 ist bezogen auf seinen in Umfangsrichtung betrachtet einnehmenden Winkel 31 seines magnetischen Poles 27, d.h. je kleiner der Winkel 31, desto hochpoliger ist der Rotor 5. Mit anderen Worten, bei einem vierpoligen Rotor 5 ist der Sektor 29, 90°, bei einem sechspoligen Rotor 60°, bei einem achtpoligen Rotor 45° usw. In dieser sechspoligen Ausführung ist der Pol 27 durch zwei V-förmig angeordnete Permanentmagnete 9 gebildet. Die Pole 27 des Rotors 5 können im Querschnitt betrachtet ebenso aus mehreren Permanentmagneten 9 gebildet sein, beispielsweise aus Doppel-V-förmigen Anordnungen, aus U-förmigen Anordnungen oder W-förmigen Anordnungen oder auch nur aus tangential angeordneten Permanentmagneten 9. Diese nicht abschließenden Ausgestaltungen und Anordnungen von Permanentmagneten 9 in Polen 27 sind den FIG 16 bis 26 beispielhaft zu entnehmen.

Auch in axialer Richtung sind je nach axialer Länge des Rotors 5 mehrere Permanentmagnete 9 pro Ausnehmung 21 vorgesehen.

Ausnehmungen 21 in einem Blech 8, wobei axial angeordnete Bleche 8 ein Blechpaket 30 bilden, sind dabei Ausstanzungen der einzelnen Bleche 8, die paketiert, axial hintereinander angeordnet sind. Die Ausnehmungen 21 fluchten somit axial. Die Ausnehmungen 21 weisen sowohl Taschen 10 als auch die Flusssperren 13 auf. Die Taschen 10 sind zur Aufnahme der oder des Permanentmagneten 9 vorgesehen. In den Raum der Ausnehmungen 21 ragen optional Stege und/oder Haltenasen 24 zur ergänzenden Fixierung und Halterung der Permanentmagnete 9 während der Fertigung und im Betrieb der dynamoelektrischen Maschine 1 um Fliehkraftbeanspruchungen entgegen zu wirken.

Die Permanentmagnete 9 sind also in den Ausnehmungen 21 angeordnet, wobei eine Ausnehmung 21 sich aus Flusssperren 13, aus gegebenenfalls optionalen Halteelementen 24 und aus Taschen 10 zusammensetzt. Die Taschen 10 sind dabei für die Aufnahme der Permanentmagnete 9 vorgesehen, die Flusssperren 13 und gegebenenfalls Halteelemente 24 dienen der Optimierung des magnetischen Flusses bzw. der Fixierung der Permanentmagnete 9 im Blechpaket 30 des Rotors 5.

Vorteilhafterweise kann dabei - wie später ausgeführt wird - über die Flusssperren 13 auch Vergussmasse in die Ausnehmungen 21 eingebracht werden.

Idealerweise sind die Permanentmagnete 9 ohne Spalte zu den Blechen 8 in den Ausnehmungen 21 platziert - bilden also eine lückenlose und vollflächige Anlage. Eine derartige nahezu komplementäre Anordnung ist aber aus fertigungstechnischen Gründen nicht möglich. Es entstehen fertigungsbedingt axial verlaufende Spalte zwischen den Permanentmagneten 9 und den Blechen 8, die geschlossen werden müssen.

Diese Bleche 8 weisen nun in Umfangsrichtung betrachtet mehrere Sektoren 29 auf, wobei diese Sektoren 29 erste Ausgestaltungen 81 oder zweite Ausgestaltungen 82 aufweisen können. Neben der Grundausstattung der Bleche 8, wie Wellenbohrung 26, Ausnehmungen 21, gleiche Anzahl von Polen 27 und gleicher Außendurchmesser, weisen die Sektoren 29 mit erster Ausgestaltung 81 Mittel und/oder Elemente auf, um eine Verteilung einer Vergussmasse im Blechpaket 30 zu erleichtern und einen optimalen magnetischen Flussverlauf zu erhalten. Die Sektoren 29 mit zweiter Ausgestaltung 82 weisen Mittel und/oder Elemente auf, die auch bei hohen Drehzahlen des Rotors 5 das Blechpaket 30 ausreichend mechanisch sichern. Dies geschieht, z.B. durch mechanische Halteelemente, u.a. wie verstärkte Randstege 31, Haltenasen 24 und Haltestege 28 zur mechanischen Verstärkung des jeweiligen Sektors 29 und damit auch des Blechpakets 30.

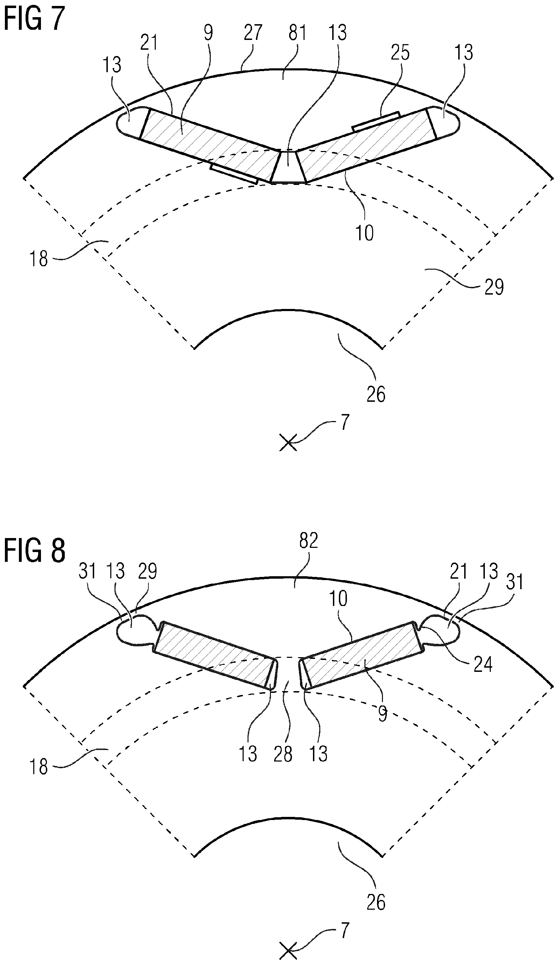

Partielle Ausstanzungen 25, wie insbesondere auch in FIG 7 dargestellt, sind vorzugsweise bei Sektoren 29 mit erster Ausgestaltung 81 vorhanden.

Durch Form und Lage bilden diese partiellen Ausstanzungen 25 definierte Kapillaren, die zur sicheren Fixierung der Permanentmagnete 9 durch Verkleben/Vergießen in den Taschen 10 beitragen. Dies gestattet beim Herstellungsprozess des Rotors 5 eine größere Auswahl hinsichtlich der Viskosität der einsetzbaren Kleber/Vergussmassen.

Es ist jedoch auch möglich, dass sich die partiellen Ausstanzungen 25 unabhängig von den Sektoren 29 über die gesamte axiale Länge einer oder mehreren Taschen 10 des Blechpakets 30 erstrecken, gegebenenfalls sogar mäandernd verlaufen, um eine ausreichende Verteilung einer Vergussmasse 20 oder eines Klebers im Blechpaket 30 zu erhalten.

Ebenso ist es möglich die Taschen 10 lediglich axial abschnittsweise mit derartigen partiellen Ausstanzungen 25 auszuführen. Dazu sind dann die dementsprechenden Sektoren 29 zu gestalten.

Da spezifische Eigenschaften der Sektoren 29, wie erste Ausgestaltung 81, zweite Ausgestaltung 82 etc., mit anderen Worten, wie Halteelemente 24 zur mechanischen Verstärkung und partielle Ausstanzungen 25 bei nur einem oder einigen - aber nicht allen - Sektoren 14 des Bleches 8, vorliegen, sind diese Eigenschaften im axialen Verlauf des Blechpakets 30 allen Polen 27 bzw. Sektoren 29 zuweisbar. Dabei wird während des Paketierens des Blechpakets 30 durch Verdreh- und/oder Umschlagspaketierung der einzelnen Bleche 8, diese Eigenschaften gezielt den vorgesehenen magnetischen Polen 27 bzw. den jeweiligen Sektoren 29 zugewiesen.

Verdreht oder verdreht und umgeschlagen wird dabei durch einen Winkel, der sich aus der Polzahl p des Rotors 5 ergibt.

Mit anderen Worten, Umgeschlagen wird immer um 180° Grad, so dass eine Vorderseite eines Bleches 8 zu einer Rückseite des Bleches 8 wird. Verdreht wird immer um einen Winkel 31 des Sektors 14, mit anderen Worten, z.B. bei einem sechspoligen Rotor 5 um 60° oder ein ganzzahliges Vielfaches (2-, 3- oder 4-fach) davon.

Ein weiterer Vorteil ist, dass durch das Verdrehen der Bleche 8 Anisotropien aus den Materialeigenschaften des Bleches (Festigkeit und magnetische Eigenschaften sind beispielsweise abhängig von der Walzrichtung bei der Herstellung der Bleche) egalisiert werden. Über die axiale Länge des Blechpakets 30 des Rotors 5 betrachtet, führt dies zu einer Homogenisierung der magnetischen Eigenschaften des gesamten Blechpakets 30, was zur Steigerung der Effizienz und zur Laufruhe der dynamoelektrischen Maschine 1 beiträgt.

Weitere Optimierungen der jeweiligen Bleche sind hinsichtlich mechanischer Festigkeit die Ausgestaltung der Halteelemente 24, die Randbegrenzungen bzw. Randstege 31 der Flusssperren 13 im Bereich der Oberfläche 19 des Rotors 5 und der Haltenasen 24, um die Permanentmagnete 9 in den Taschen 10 der Ausnehmungen 21 zu halten. Dabei kann die Anzahl, axiale und/ oder radiale Dicke und Formgebung der Halteelemente, Haltenasen 24 und Randstege 31 je nach Anforderung beim Stanzvorgang vorgegeben werden.

Bei der Dimensionierung der Flusssperren 13 der Ausnehmungen 21 sind nicht nur die magnetischen Anforderungen, sondern auch die Anforderungen an die Verteilung der einsetzbaren Kleber und Vergussmaterialien zu beachten.

Die Verabreichung des Klebers oder der Vergussmasse 20, über und in die Flusssperren 13, erfolgt beim Füllprozess mit oder ohne Druck.

Die im Rotor 5 vorhandenen Ausnehmungen 21 weisen dann im axialen Verlauf betrachtet alle Möglichkeiten der Einzeloptimierung ihrer jeweiligen Sektoren 29 auf, um ein speziell auf den Rotor 5 und dessen Einsatzgebiet, z.B. Drehzahlbereich zugeschnittenes Blechpaket 30 zu erhalten. Je nach Drehzahlanforderungen und damit verbundenen Fliehkraftbeanspruchungen, dem vorgesehenen Vergussmaterial etc., sind dementsprechend die Sektoren 29 der Bleche 8 mit einer ersten Ausgestaltung 81, zweiten Ausgestaltung 82, gegebenenfalls dritten Ausgestaltung 83 und deren axiale Reihung und Verdrehung und/oder Umschlagung ausgeführt, um ein Blechpaket 30 zu erhalten.

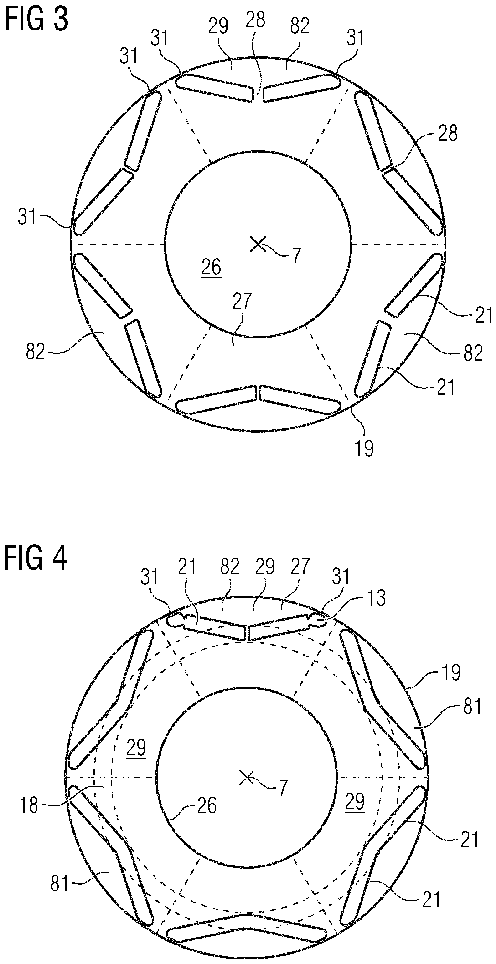

Zusätzlich oder stattdessen können die Bleche 8, um eine mechanische Stabilität des Blechpakets 30 zu erhalten, die einzelnen Bleche 8 nach vorgebbarer axialer Reihenfolge, unter Verdrehen und/oder Umschlagen zumindest zum Teil miteinander verklebt werden. Damit können gegebenenfalls Haltestege 28 oder Randstege 29, die der Stabilisierung des Blechpakets 30 dienen mit geringeren Dimensionen ausgeführt werden oder was die Haltestege 28 betrifft zumindest teilweise sogar entfallen, wie dies FIG 4 zu entnehmen ist. Diese Reduzierung dieser Stege reduziert den magnetischen Streufluss.

Im axialen Verlauf des Blechpakets 30 werden somit durch die gezielte Optimierung einzelner Ausnehmungen 21 eines Sektors 29 durch erste Ausgestaltungen 81 und zweite Ausgestaltungen 82, insbesondere der Taschen 10 hinsichtlich einer Anforderung, die negativen Auswirkungen auf andere Anforderungen deutlich reduziert.

FIG 3 zeigt ein Blech 8 eines sechspoligen Rotors 5, bei dem jeder Sektor 29 gleich ausgebildet ist. Dieses Blech 8 weist somit bei allen Sektoren 29 die Grundausstattung auf.

Dieses Blech hat somit im Normalfall keine Haltenasen 24, keine partiellen Ausstanzungen 25, keine verstärkten Randstege 31, es weist, sofern notwendig, lediglich radiale Haltestege 28 zwischen den Ausnehmungen 21 eines Sektors 29 auf.

Erfindungsgemäß würde aber zumindest ein Sektor 29 derart weitergebildet sein, dass er eine erste, zweite etc. Ausgestaltung aufweist.

FIG 4 zeigt ein Blech 8 eines sechspoligen Rotors 5, bei dem ein Sektor 29 eine zweite Ausgestaltung 82 aufweist. Die anderen Sektoren weisen eine gleiche erste Ausgestaltung 81 auf, wobei dort keine Halteelemente vorhanden sind, auch insbesondere keine radialen Haltestege 28 zwischen den Ausnehmungen 21 eines Sektors 29. Die ersten Ausgestaltungen 81 können dabei zumindest einzeln partielle Ausstanzungen 25 aufweisen, wie sie beispielhaft auch in FIG 7 gezeigt sind.

Ebenso ist es möglich zumindest einen weiteren Sektor 29 mit einer zweiten Ausgestaltungen 82, z.B. gegenüberliegend, auszubilden.

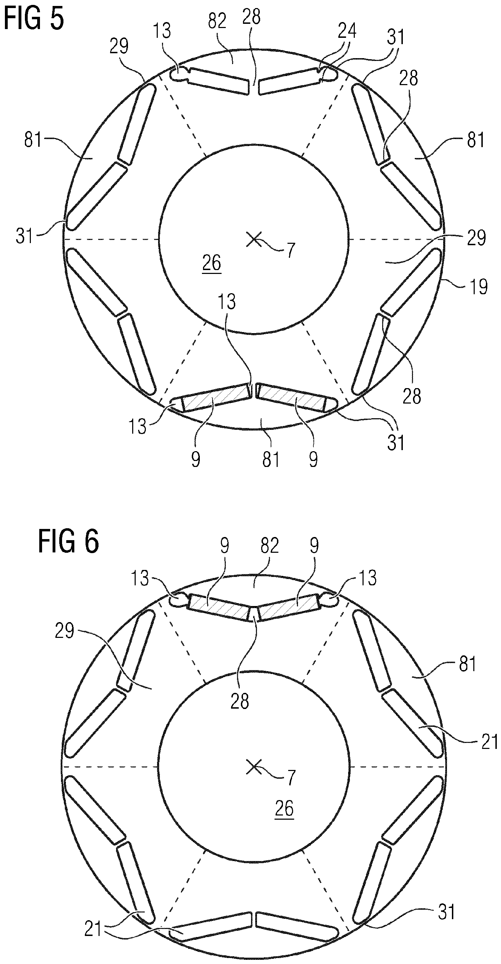

FIG 5 zeigt ein Blech 8 eines sechspoligen Rotors 5, das im Vergleich zu FIG 4 auch bei den Ausnehmungen der Sektoren 29 mit erster Ausgestaltung 81 radiale Haltestege 28 vorsieht. Der Sektor 29 mit der zweiten Ausgestaltung 82 weist verstärkte Haltestege 28 auf, die beispielsweise trapezförmig ausgebildet sind.

Ebenso ist es möglich zumindest einen weiteren Sektor 29 mit einer zweiten Ausgestaltungen 82, z.B. gegenüberliegend auszubilden.

FIG 6 zeigt ein Blech 8 eines sechspoligen Rotors 5, das im Vergleich zu FIG 4 auch bei den Ausnehmungen der Sektoren 29 mit erster Ausgestaltung 81 radiale Haltestege 28 vorsieht. Der Sektor 29 mit der zweiten Ausgestaltung 82 weist verstärkte Haltestege 28 auf, die trapezförmig ausgebildet sind. Dies ist besonders bei hohen Drehzahlen wichtig.

Ebenso ist es möglich zumindest einen weiteren Sektor 29 mit einer zweiten Ausgestaltungen 82, z.B. gegenüberliegend auszubilden.

FIG 7 zeigt eine Detaildarstellung eines Sektors 29 eines vierpoligen Rotors 5, mit einer ersten Ausgestaltung 81. Die Ausnehmung 21 ist V-förmig. Die Taschen 10, in denen sich die Permanentmagnete 9 befinden, weisen in dieser Ausführung partielle Ausstanzungen 25 der Taschen 10 auf. Ein Ringkanal 18 einer Verteilerscheibe 16 über den eine Vergussmasse 20 in die Ausnehmungen gebracht wird, ist gestrichelt dargestellt.

Ein zweiter optionaler Ringkanal kann auch über die radial äußeren Flusssperren 13 die Vergussmasse einbringen.

FIG 8 zeigt eine Detaildarstellung eines Sektors 29 eines vierpoligen Rotors 5, mit einer zweiten Ausgestaltung 82. Die Permanentmagnete 9 sind V-förmig angeordnet und durch einen Haltesteg 28 getrennt. Der Haltesteg 28 und die Randstege 31 sind dabei verstärkt, d.h. breiter, bzw. radial dicker ausgeführt. Haltenasen 24 fixieren die Permanentmagnete 9 in den Ausnehmungen 21.

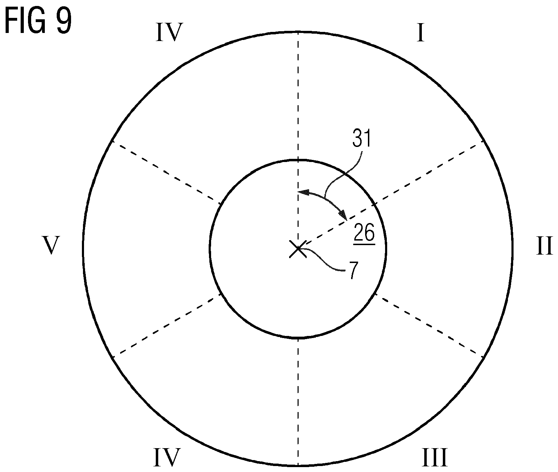

FIG 9 zeigt die Anordnung der Sektoren 14 eines Blechpakets 30 eines sechspoligen Rotors 5, und deren in Umfangrichtung betrachtet zugewiesenen Positionierung I bis VI.

Bei der Stapelung bzw. Paketierung des Blechpakets 30 können nunmehr beispielsweise Bleche 8 nach FIG 2 folgendermaßen erfindungsgemäß angeordnet werden.

Eine vorgebbare Anzahl von Blechen 8 wird axial so angeordnet, dass Sektoren 14 mit zweiter Ausgestaltung 82 an Position I sind. Das bedeutet, dass dementsprechend Sektoren 29 mit erster Ausgestaltung 81 an Position II sind. Nachdem das Blech 8 nach FIG 2 bei gegenüberliegenden Sektoren 29 gleiche Ausgestaltungen 81, 82 hat, bedeutet das, dass die zweite Ausgestaltung 82 auch an Position IV ist. Ebenso bedeutet das, dass die erste Ausgestaltung 81 auch an Position V ist. Die Ausstattung des Bleches bzw. Sektors 29 an Position III und VI kann eine Grundausstattung oder eine Ausstattung nach einem dritten Polsektor 83 sein.

Erfindungsgemäß wird nunmehr nach diesem ersten Stapel, ein zweiter Stapel oder eine Anzahl von Einzelblechen 8 nach FIG 2, um zumindest einen Winkel 31, also eine Polteilung gedreht. D.h., dass sich nunmehr die Sektoren 29 mit der zweiten Ausgestaltung 82 an Position II und V des Blechpakets 30 befinden. Die Sektoren mit der ersten Ausgestaltung 81 sind nunmehr an Position III und VI, da auch die Ausgestaltungen der gegenüberliegenden Sektoren 29, im Uhrzeigersinn betrachtet, um eine Position weitergedreht worden sind.

Diese Art der Stapelung bzw. Paketierung wird über die gesamte Länge des Blechpakets 30 fortgesetzt. Mit anderen Worten, über die axiale Länge des Blechpakets 30 betrachtet ergeben sich immer wieder Positionen I bis IV die unterschiedlichen Ausgestaltungen ihrer Sektoren 29 aufweisen. Somit werden axial betrachtet abschnittweise u.a. mechanische Verstärkungen (zweite Ausgestaltung 82) der einzelnen Sektoren 29 und damit des Blechpakets 30 gebildet.

Optional können die Bleche 8 dabei auch axial miteinander verklebt werden. Als Einzelbleche aneinander oder auch als Teilblechpakete.

Nachdem Paketieren werden die Permanentmagnete 9 axial in die Ausnehmungen 21 eingesetzt.

Danach wird eine Verteilscheibe 16 an einer oder beiden Seiten des Blechpakets 30 dichtend angebracht. Über die Verteilscheibe 16 wird - wie später beschrieben - das Blechpaket 30 vergossen.

Anstatt einer Drehung um einen Winkel 31 kann auch eine Drehung und Umschlagung der Bleche 8 erfolgen.

Diese Art der Stapelung der Bleche 8 lässt sich auch auf die beispielhaft dargestellten - aber nicht abschließend aufgezeigten - Blechschnitte nach FIG 3, 4, 5, 6 übertragen.

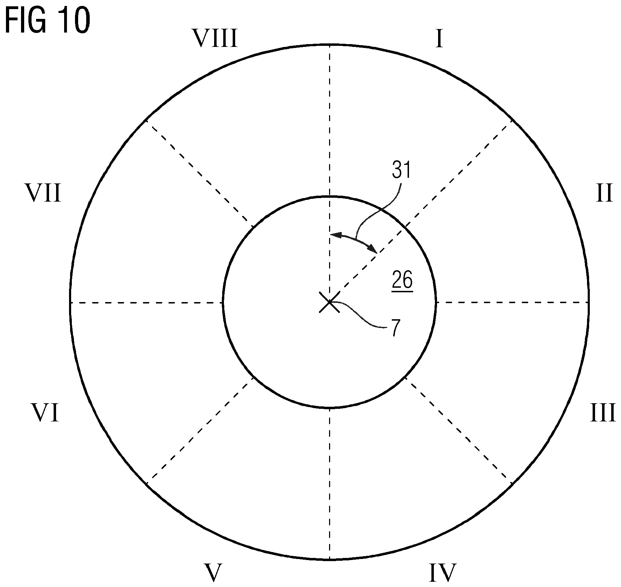

FIG 10 zeigt die Anordnung der Sektoren 29 eines achtpoligen Rotors 5, und deren in Umfangrichtung betrachtet zugewiesenen Positionierung I bis VIII. Die Ausführung zu FIG 9 sind sinngemäß auch auf FIG 10 zu übertragen.

Dies gilt ebenso für vierpolige, zehnpolige, zwölfpolige Rotoren 5.

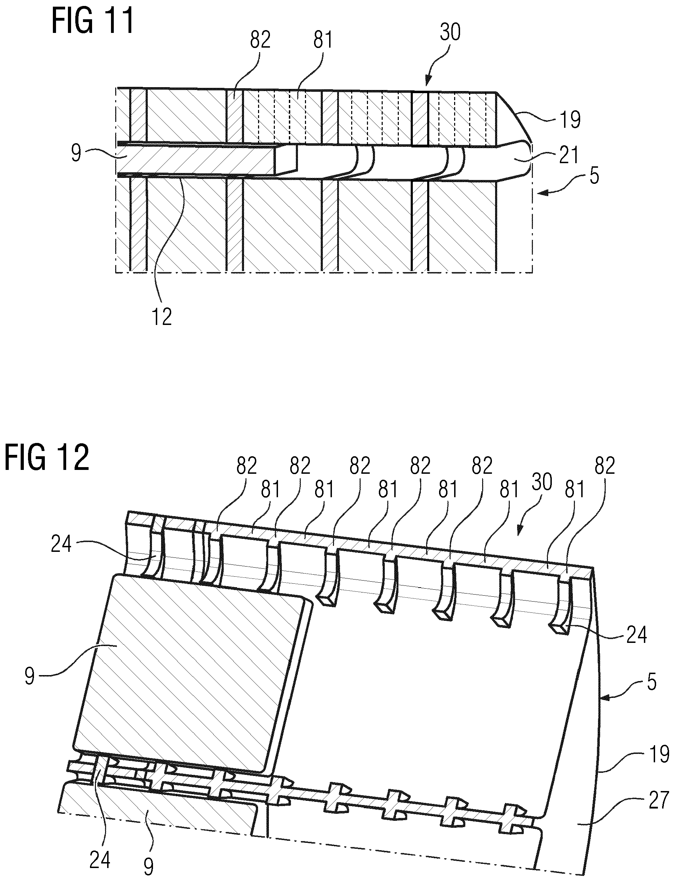

FIG 11 zeigt in einer perspektivischen Darstellung eine Ausnehmung 21 mit dem sie umgebenden Blechpaket 30. Zwischen den

Blechen 8 des Blechpakets 30 und den Permanentmagneten 9 sind Spalte 12, die das axiale Einsetzen der Permanentmagnete 9 ermöglichen, aber unter elektromagnetischen und/oder mechanischen Gesichtspunkten ungünstig sind. Um den Füllvorgang u.a. dieser Spalte 12 durch die Vergussmasse 20 zu erleichtern, sind die in FIG 7 beschriebenen partiellen Ausstanzungen 25 hilfreich.

FIG 12 zeigt in perspektivischer Darstellung einen Schnitt durch ein derartiges Blechpaket 30, wobei in einer Ausnehmung 21 ein Permanentmagnet 9 dargestellt ist. Zweite Ausgestaltungen 82 dieses Sektors 29 fixieren dabei den Permanentmagneten 9 durch Haltenasen 24. Das hat den Vorteil, dass bei den axial folgenden Blechen eine derartige Positionierung nicht notwendig ist, da sich die Permanentmagnete 9 über eine gewisse vorgebbare axiale Länge innerhalb des Blechpakets 30 erstrecken.

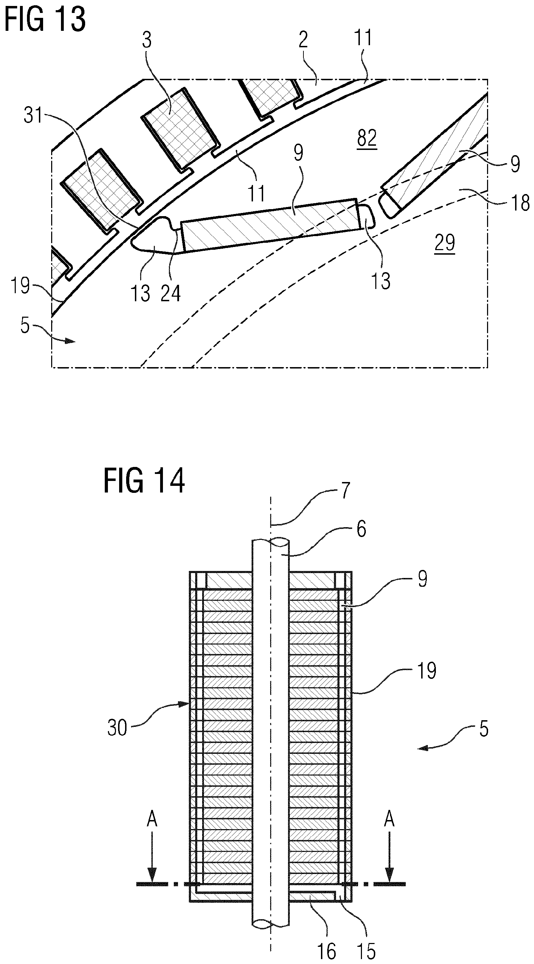

FIG 13 zeigt einen Ausschnitt einer dynamoelektrischen Maschine 1, mit einem Wicklungssystem 3, das bei Bestromung ein Magnetfeld erzeugt, das durch elektromagnetische Wechselwirkung mit dem mit Permanentmagneten 9 versetzten Rotor 5 ein Drehmoment erzeugt. In dem Pol 27, der durch zwei V-förmig angeordnete Permanentmagnete 9 in ihren Ausnehmungen 21 gebildet ist, sind die Permanentmagnete 9 durch die Vergussmasse 20 oder Kleber fixiert. Die Vergussmasse 20 wurde u.a. über die Flusssperren 13 in die Ausnehmungen 21 gegeben. In dieser Darstellung ist der Pol 27 bzw. dessen Sektor 29 mit einer zweiten Ausgestaltung 82 ausgebildet. Ringkanäle 18 einer an der Stirnseite des Blechpakets 30 befindlichen verteilscheibe 16 sind nur gestrichelt dargestellt.

FIG 14 zeigt einen Rotor 5, dessen Blechpaket 30 durch zwei Endscheiben paketiert ist, wobei zumindest eine Endscheibe als Verteilscheibe 16 ausgeführt ist. Diese Verteilscheibe 16 weist auf der einer Stirnseite des Blechpakets 30 zugewandten Seite zumindest einen Ringkanal 18 auf, der über eine Zuführung 15 füllbar ist. Über diese Zuführung 15 wird nunmehr der

Ringkanal 18 und gegebenenfalls weitere Erweiterungen 17 mit einem Vergussmaterial, insbesondere einem thixotropischen Material oder einem Kleber unter Druck beaufschlagt.

Ein Paketieren der Bleche 8 erfolgt vorher beispielsweise auf einer Hilfswelle. Ebenso ist es möglich die Bleche 8 zu verkleben. Ebenso ist Stanzpaketieren der Bleche 8 möglich, um ein Blechpaket 30 des Rotors 5 zu erhalten, in das die Permanentmagnete 9 einsetzbar sind.

Die Verteilscheibe 16 wird nunmehr auf das mit Permanentmagneten 9 versehenen Blechpaket 30 positioniert, um den Füllvorgang durchzuführen. Die Verteilscheibe 16 kann auch mehrere Zuführungen 15 aufweisen, um die zuführbare Menge an Vergussmasse zu steigern.

Das Blechpaket 30 und/oder die Verteilscheiben 16 werden vorzugsweise auf die Welle 6 geschrumpft. Ebenso sind andere Möglichkeiten vorhanden, das Drehmoment vom Blechpaket 30 auf die Welle 6 zu übertragen, wie Passfederverbindungen etc. Eine axiale Paketierung des Blechpakets 30 kann auch über Zugankerverbindungen erfolgen. Dazu sind dann im Blechpaket 30 axial verlaufende Bohrungen zur Aufnahme eines Zugankers vorzusehen.

Ein zusätzliches Paketieren erfolgt dann, wenn sich das Blechpaket 30 auf der eigentlichen Welle 6 befindet. Dabei wird das Blechpaket 30 mittels zweier Scheiben, insbesondere zumindest einer Verteilscheibe 16, zusammengepresst.

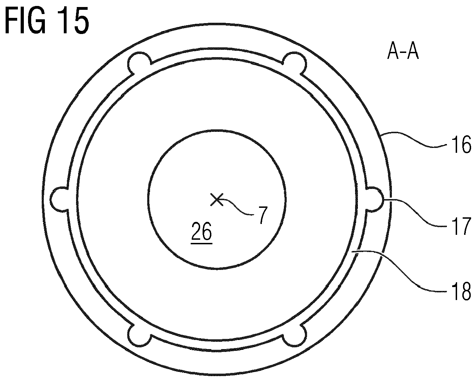

FIG 15 zeigt einen Schnitt durch die Verteilscheibe 16 bei der ein umlaufender, nach einer Seite offener Ringkanal 18 vorgesehen ist und der als optionale Ausbildung Erweiterungen 17 aufweist, die jeweils einen Pol 27 bzw. Sektor 29 des Rotors 5 mit einer Vergussmasse 20 versorgen.

Die Verteilscheibe 16 weist auf der dem Blechpaket 30 des Rotors 5 zugewandten Seite zumindest einen umlaufenden zum Blechpaket 30 hin offenen Ringkanal 18 auf, der insbesondere auf Höhe der radial weiter innenliegenden Flusssperren 13 verläuft. Der Ringkanal 18 schließt formschlüssig und dicht mit der Stirnseite des Blechpakets 30 ab. Im Bereich der Flusssperren 13, die axial verlaufenden Kanäle bilden, weist der Ringkanal 18 optional Erweiterungen 17 auf. Damit lassen sich u.a. Verteilscheiben 16 gleichen Typs bei unterschiedlichen Blechschnitten des Rotors 5 verwenden.

Auf der dem Blechpaket 30 abgewandten Seite der Verteilscheibe 16 ist zumindest eine Injektionsöffnung, also eine Zuführung 15 vorgesehen, um den Ringkanal 18 zu speisen. Über den Ringkanal werden die Flusssperren 13 mit einer Vergussmasse 20 gespeist. Optional weist die Verteilscheibe 16 einen weiteren dazu konzentrischen Ringkanal 18 auf, um auch über die radial äußeren Flusssperren 13 der Ausnehmung 21 eines Pols 27 des Rotors 5, ausreichend Vergussmasse für den jeweiligen Pol 27 bereitstellen zu können.

Der Ringkanal 18 und optional dessen Erweiterung 17 schließen mit der Stirnseite des Blechpakets 30 formschlüssig und dicht ab, um einen dementsprechenden Druck der Vergussmasse oder des Klebers und damit die erforderlichen Scherkräfte aufbauen zu können.

Über die Zuführung 15 wird nunmehr die vorab, insbesondere in situ gemischte Vergussmasse in das Blechpaket 30 des Rotors 5 mit vorgebbarem Druck gedrückt.

Bei dieser, insbesondere als thixotropisches Material ausgeführte Vergussmasse 20, stellt sich aufgrund der erhöhten Scherkräfte eine vergleichsweise geringe Viskosität ein, die der Vergussmasse 20 ermöglicht in die Spalte und Ausnehmungen 21 des Blechpakets 30 einzudringen, die von Permanentmagneten 9 eingenommen werden. Bei dem Vergussprozess wird nunmehr die Vergussmasse unter vorgebbarem Druck reingepresst und aufgrund der geringeren Viskosität verteilt sich diese in den Flusssperren 13 bzw. Spalten 12 zwischen Permanentmagneten 9 im Blechpaket 30. Eine Überwachung des Drucks kann den Vorgang beenden, so dass die Vergussmasse in dem Moment, wenn die Scherkräfte reduziert werden (Druckreduktion) eine Viskositätssteigerung erfährt und somit der Vorgang des Vergießens abgebrochen wird bzw. werden kann. Sobald sich die Vergussmasse in den Spalten und Flusssperren 13 um den Permanentmagneten 9 verteilt hat und eine weitere Ausdehnung in die Zwischenräume der Bleche 8 (also einer Ebene senkrecht zur Achse) ansteht, steigert sich der erforderliche Druck, der dann als Abbruchkriterium des Vergießens angezogen werden kann. Damit wird vermieden, dass die Vergussmasse beispielsweise radial zwischen die Bleche des Rotors 5 dringt und insbesondere an die Oberfläche 19 des Rotors 5 tritt.

Dabei wird die Vergussmasse 20 axial über die daran anschließenden Flusssperren 13 reingedrückt, wobei sich dabei dann die Vergussmasse 20 den weiteren Weg zwischen den Permanentmagneten 9 und den Blechen sucht, um auch in die radial außen liegenden Flusssperren 13 einzudringen und diese ebenfalls zu füllen. Durch Überwachung des Drucks beim Einfüllen der Vergussmasse 20 und damit der Scherkräfte kann der Vorgang, sobald die "Ausnehmungen voll sind", abgebrochen werden. Dabei wird vermieden, dass insbesondere über die vergleichsweise schmalen Randstege 31 vor allem bei den Sektoren 29 mit erster Ausgestaltung 81 die Vergussmasse 20 an die Oberfläche 19 des Rotors 5 tritt.

Die Vergussmasse 20 oder der Kleber lassen sich auch ohne externen Druck in die erforderlichen Hohlräume des Blechpakets 30 einfüllen.

Die Figuren 16 bis 26 zeigen Ausgestaltungen von Ausnehmungen 21 zur Aufnahme von Permanentmagneten 9 und zur Bildung von Polen 27. Aus Gründen der zeichnerischen Vereinfachung sind lediglich einige im Vorfeld genannte ersten und zweiten Ausgestaltungsmerkmale dargestellt.

Diese weiteren Figuren 16 bis 26 zeigen in nicht limitierenden oder abschließenden Ausführungen Anordnungen von Permanentmagneten 9 innerhalb eines Sektors 29 bzw. Poles 27 die eine erste Ausgestaltung 81 oder eine zweite Ausgestaltung 82 aufweisen können.

Dabei weist selbstverständlich jeder Permanentmagnet 9 nicht näher dargestellte Flusssperren 13 und zumindest abschnittsweise Halteelemente 24 auf.

Dabei zeigt FIG 16 eine Ausnehmung 21 eines Pols 27 mit einem Sektor 29 einer zweiten Ausgestaltung 82, der als zusätzliches Merkmal über die Grundausstattung hinausgehend das Halteelement, wie unterschiedlich ausgeführte Haltenasen 24 aufweist.

FIG 17 zeigt einen Sektor 29 mit einer zweiten Ausgestaltung 82, die zwei Haltenasen 24 aufweist.

Beispielhaft ist gezeigt, was grundsätzlich bei jeder Ausnehmung 21 der Fall sein kann, dass sich die Permanentmagnete 9 in einer Tasche 10 in Umfangsrichtung und/oder axialer Richtung aus mehreren Permanentmagneten 9 zusammensetzen können.

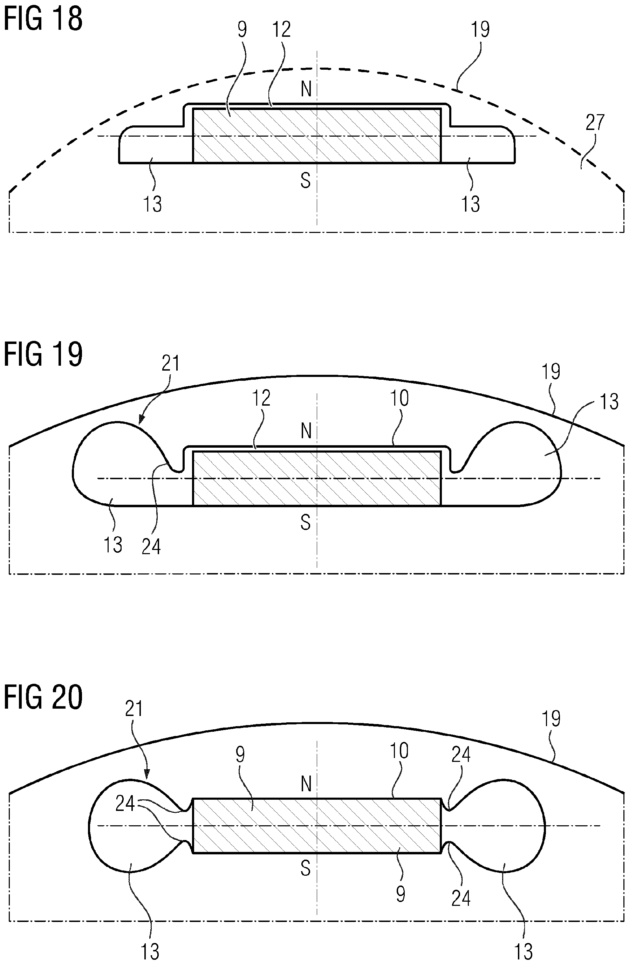

FIG 18 zeigt eine mögliche Ausführung eines Sektors 29 mit zweiter Ausgestaltung 82.

FIG 19 zeigt eine weitere mögliche Ausführung eines Sektors 29 mit zweiter Ausgestaltung 82.

FIG 20 zeigt eine weitere mögliche Ausführung eines Sektors 29 mit zweiter Ausgestaltung 82, dabei sind gegenüberliegende Haltenasen 24 einer Ausnehmung 21 vorhanden.

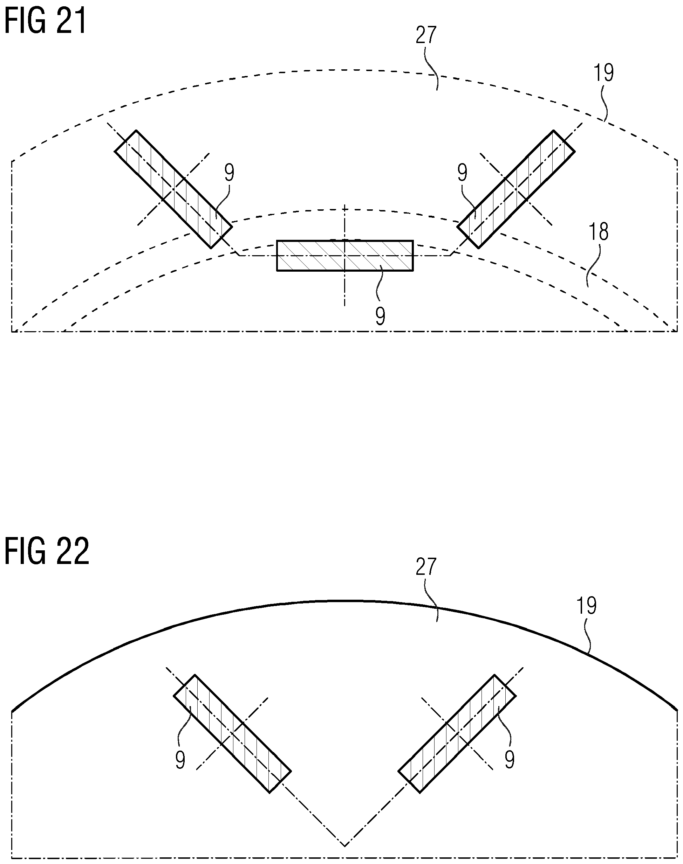

FIG 21 bis 26 zeigen mögliche Ausgestaltungen von Polen 27 und deren Anordnungen von Ausnehmungen 21 mit ihren Permanentmagneten 9 für die die oben dargelegten Ausführungen gelten. Die Ausnehmungen 21 wurden aus Gründen der Übersichtlichkeit nur mit ihren Permanentmagneten 9 aufgezeigt. Haltelemente und Flusssperren 13 also auch partielle Ausstanzungen 25 wurden unterdrückt.

Eine permanenterregte Synchronmaschine mit einem erfindungsgemäßen Rotor 5, dessen Permanentmagnete 9 vergraben angeordnet und vergossen, insbesondere mit einer derartigen thixotropischen Vergussmasse fixiert sind, erreicht einen vergleichsweisen hohen Wirkungsgrad und ist demnach für viele Arbeitsmaschinen, vor allem denen im Dauerbetrieb besonders geeignet.

Die Herstellung eines derartigen Rotors 5 wird durch das erfindungsgemäße Verfahren mit der thixotropischen Vergussmasse besonders einfach.

Die Erfindung kann auch sinngemäß auf Bleche erster und zweiter Ausgestaltung angewandt werden. Dabei erfüllt ein Blech die mechanische Anforderung oder die elektromagnetische Anforderung.

## Patentansprüche

1. Rotor (5) einer dynamoelektrischen permanenterregten Maschine (1) mit
einer vorgebbaren Anzahl von Polen (27),
- wobei die Pole (27) des Rotors (5) jeweils durch einen oder mehrere Permanentmagnete (9) gebildet sind und Sektoren bilden,
- wobei die Permanentmagnete (9) in im Wesentlichen axial verlaufenden, umfänglich geschlossenen Ausnehmungen (21) eines Blechpakets (30) angeordnet sind,
- wobei die Ausnehmungen (21), Bereiche von Taschen (10), zur Aufnahme der Permanentmagnete (9) und Flusssperren (13), zur Führung eines Magnetflusses aufweisen, in welche Ausnehmungen (21) zumindest abschnittsweise Halteelemente (24) ragen,
- wobei das Blechpaket (30) Bleche aufweist, die jeweils Sektoren (29) mit zumindest zwei unterschiedlichen Ausgestaltungen (81,82,83,84) - in vorgebbarer axialer Reihenfolge und Drehung oder axialer Reihenfolge und Drehung und Umschlagung, aufgebaut ist, wobei die Bleche (8) unabhängig von der Ausgestaltung der Sektoren (29) jeweils eine Wellenbohrung (26), identische Anzahl von Polen (27) bzw. Sektoren, axial fluchtende Ausnehmungen (21) und identischen Außendurchmesser aufweisen,
- wobei Sektoren (29) mit einer ersten Ausgestaltung (81) Elemente zur Verteilung einer Vergussmasse oder eines Klebers innerhalb des Blechpakets (30) aufweisen und Sektoren (29) mit einer zweiten Ausgestaltung (82) Halteelemente zur mechanischen Festigkeit des Blechpakets (30) aufweisen,
- wobei die Flusssperren (13), und die im Wesentlichen axial verlaufenden Spalte zwischen dem Permanentmagneten (9) und dem jeweilig ihn umgebenden Blechpaket (3) durch einen Kleber und/oder eine Vergussmasse ausgefüllt sind.

2. Rotor (5) einer dynamoelektrischen permanenterregten Maschine (1) nach Anspruch 1, **dadurch gekenn** - **zeichnet** , dass die Halteelemente (24) der Sektoren (29) mit zweiter Ausgestaltung (82) als Haltestege (28) und/oder Haltenasen (24) und/oder Randstege (29) im Bereich der Ausnehmungen (21) aufweisen.

3. Rotor (5) einer dynamoelektrischen permanenterregten Maschine (1) nach Anspruch 1 oder 2, **dadurch ge kennzeichnet** , dass die erste Ausgestaltung (81) oder eine dritte Ausgestaltung (83) der Sektoren (29) partielle Ausstanzungen (25) der Taschen (10) aufweist.

4. Rotor (5) einer dynamoelektrischen permanenterregten Maschine (1) nach Anspruch 3, **dadurch gekenn** - **zeichnet** , dass partiellen Ausstanzungen (25) im axialen Verlauf der Tasche (10) betrachtet mäandern.

5. Rotor (5) einer dynamoelektrischen permanenterregten Maschine (1) nach einem der vorhergehenden Ansprüche, **da** - **durch gekennzeichnet** , dass an zumindest einer Stirnseite des Blechpakets (30) des Rotors (5) eine Verteilscheibe (16) für einen Kleber und/oder Vergussmaterial vorgesehen ist.

6. Rotor (5) einer dynamoelektrischen permanenterregten Maschine (1) nach Anspruch 5, **dadurch gekenn** - **zeichnet** , dass die Verteilscheibe (16) einen Ringkanal (18) auf Höhe der Flusssperren aufweist.

7. Rotor (5) einer dynamoelektrischen permanenterregten Maschine (1) nach Anspruch 6, **dadurch gekenn** - **zeichnet** , dass die Verteilscheibe (16) einen zweiten Ringkanal (18) auf Höhe der radial weiter innenliegenden oder weiter außenliegenden Flusssperren (13) aufweist.

8. Verfahren zur Herstellung eines Rotors (5) einer dynamoelektrischen permanenterregten Maschine (1) nach Anspruch 1 durch folgende Schritte:
- Paketieren eines Blechpakets (30) aus axial geschichteten Blechen (8) mit mindestens zwei unterschiedlichen Polsektoren (81,82) axialer Reihenfolge und Drehung oder axialer Reihenfolge und Drehung und Umschlagung, wobei die Bleche (8) unabhängig von der Ausgestaltung ihrer Sektoren jeweils eine Wellenbohrung (26), identische Anzahl von Polen (27) bzw. Sektoren, axial fluchtende Ausnehmungen (21) und identischen Außendurchmesser aufweisen,
- wobei Sektoren (29) mit einer ersten Ausgestaltung (81) Elemente zur Verteilung einer Vergussmasse oder eines Klebers /Optimierung des magnetischen Flusses innerhalb des Blechpakets aufweisen und Sektoren (29) mit einer zweiten Ausgestaltung (82) Halteelemente zur mechanischen Festigkeit des Blechpakets (30) aufweisen,
- Einsetzen von Permanentmagneten (9) in die Ausnehmungen (21),
- Anbringen einer Verteilscheibe (16) an zumindest einer Stirnseite des Blechpakets (30), mit zumindest einer Zuführöffnung (15) und zumindest einem Ringkanal (18) auf der dem Blechpaket (30) zugewandten Seite, der zumindest einen Teil der Flusssperren jeder Ausnehmung (21) bedeckt,
- Vergießen der Hohlräume des Blechpakets über die Zuführöffnung und den Ringkanal (18) der Verteilscheibe (16), die Flusssperren (13), und die im Wesentlichen axial verlaufenden Spalte zwischen dem Permanentmagneten (9) und dem jeweilig ihn umgebenden Blechpaket (30), durch einen Kleber und/oder eine Vergussmasse, so dass zumindest die Permanentmagnete (9) des Rotors (5) fixiert werden.

9. Verfahren zur Herstellung eines Rotors (5) einer dynamoelektrischen permanenterregten Maschine (1) nach Anspruch 8, **dadurch gekennzeichnet , dass** die Bleche (8) mit einem Sektor erster Ausgestaltung (81) auf einer Position I nach einer vorgebbaren Anzahl von weiteren Blechen (8), insbesondere um einen Pol (27) bzw. Sektor weitergedreht werden, so dass jeder Pol (27) in vorgebbaren axialen Abständen magnetische oder mechanische Optimierungen aufweist, indem die Position der Sektoren mit erster Ausgestaltung von I bis zur Polzahl des Rotors (5) eingenommen wird.

10. Verfahren zur Herstellung eines Rotors (5) nach Anspruch 8 oder 9, **dadurch gekennzeichnet, dass** über zumindest eine Zuführöffnung (15) der Verteilscheibe (16), Vergussmasse oder Kleber, insbesondere eine thixologische Vergussmasse mittels eines vorgebbaren (ohne Druck und mit Druck) Druckes in den Rotor (5), insbesondere in die Ausnehmungen (21) gegeben wird.

11. Dynamoelektrische Maschine, insbesondere permanenterregte Synchronmaschine mit einem Rotor (5) nach einem der Ansprüche 1 bis 7 und/oder einem Rotor (5) hergestellt nach einem der Ansprüche 8 bis 10.

12. Verwendung einer dynamoelektrischen Maschine (1), insbesondere einer permanenterregten Synchronmaschine bei Kompressoren, Verdichtern, Pumpen, Antrieb von Förderbändern, in der Nahrungsmittelindustrie, in maritimen Anwendungen eingesetzt sind.
